Europäisches Patentamt

European Patent Office

Office européen des brevets

(11) Numéro de publication : **0 409 679 B1**

# (12) FASCICULE DE BREVET EUROPEEN

(45) Date de publication du fascicule du brevet :
**11.08.93 Bulletin 93/32**

(51) Int. Cl.⁵ : **B01J 27/135,** B01J 27/132, B01J 37/22

(21) Numéro de dépôt : **90401803.3**

(22) Date de dépôt : **25.06.90**

(54) **Procédé d'activation de catalyseurs halogènés, catalyseurs obtenus par ce procédé et utilisation de ces catalyseurs dans des procédés de conversion d'hydrocarbures.**

(30) Priorité : **18.07.89 FR 8909630**

(43) Date de publication de la demande :
**23.01.91 Bulletin 91/04**

(45) Mention de la délivrance du brevet :
**11.08.93 Bulletin 93/32**

(84) Etats contractants désignés :
**AT BE DE DK ES FR GB GR IT NL SE**

(56) Documents cités :
**FR-A- 2 201 128**
**FR-A- 2 320 775**

(73) Titulaire : **TOTAL RAFFINAGE DISTRIBUTION S.A.**
**84, rue de Villiers**
**F-92538 Levallois Perret Cédex (FR)**
Titulaire : **AKZO N.V.**
**Velperweg 76**
**NL-6824 BM Arnhem (NL)**

(72) Inventeur : **Szabo, Georges**
**38, rue de Normandie**
**F-7629 Montivilliers (FR)**
Inventeur : **Schasfoort, Egbertus Franciscus Plechelmus**
**Siriusstraat 44**
**NL-1223 AP Hilversum (NL)**
Inventeur : **Milan, Alain**
**3, rue Brénier, Fontaine-la-Mallet**
**F-762900 Montivilliers (FR)**

(74) Mandataire : **Ohayon, Joseph et al**
**Cabinet Jolly 54, rue de Clichy**
**F-75009 Paris (FR)**

EP 0 409 679 B1

EP 0 409 679 B1

## Description

La présente invention concerne un nouveau procédé d'activation de catalyseurs halogénés contenant un métal de la mine du platine et au moins deux types de sites de Lewis liés au support, à savoir des sites de Lewis à base de zirconium, de molybdène, de tungstène ou de titane, et des sites de Lewis à base d'aluminium, de bore ou de gallium. L'invention concerne également les catalyseurs ainsi activés, ainsi que leur utilisation dans des procédés de conversion d'hydrocarbures.

On sait que les catalyseurs possédant un halogénure d'aluminium et un métal de la mine du platine peuvent être utilisés dans de nombreux procédés de traitement d'hydrocarbures, tels que l'isomérisation des paraffines, l'alkylation des hydrocarbures aromatiques ou celle des hydrocarbures paraffiniques par des oléfines, le craquage ou l'hydrocraquage des hydrocarbures et, enfin, la transalkylation ou l'isomérisation des hydrocarbures aromatiques. De tels catalyseurs et, en particulier, ceux d'isomérisation des paraffines ont été décrits dans la littérature, par exemple dans les brevets français 2 320 775, 2 206 124, 2 201 128, 1 546 658, ou anglais 952 348.

Ces catalyseurs comprennent en général un support qui peut être une alumine, une silice, une silice alumine, un aluminosilicate ou un mélange de ces derniers. Parmi les catalyseurs d'isomérisation connus, on peut citer ceux comprenant un métal noble, notamment le platine, auquel on peut associer l'étain, le nickel, le germanium, le rhénium, le plomb, ou les métaux des groupes IB, IIB, VB, VIIB, III et IV de la classification périodique des éléments, et comprenant en outre des halogénures métalliques du type acide de Lewis, c'est-à-dire du type possédant des groupements -$OMX_2$ dans lequel X est un atome d'halogène et, en particulier, un atome de chlore, et M est un atome de métal tel que en particulier, l'aluminium.

Parmi ces catalyseurs, il a déjà été établi (voir brevet français n° 2 320 775) que les catalyseurs dits "bimétalliques", c'est-à-dire possédant un métal de la mine du platine associés à des sites de Lewis constitués en particulier par les halogénures d'un métal appelé "promoteur", tel que le zirconium, le molybdène, le tungstène ou le titane, présentaient une activité catalytique améliorée par un effet de synergie dudit promoteur.

En poursuivant leurs travaux dans ce domaine, les sociétés demanderesses ont mis en évidence le fait que les propriétés de tels catalyseurs bimétalliques peuvent être notablement améliorées en soumettant les catalyseurs de ce type à une étape d'activation dans des conditions particulières, entre l'étape de préparation proprement dite de ces catalyseurs et l'étape d'utilisation de ceux-ci dans les réacteurs où est conduite la réaction à catalyser.

En particulier, l'amélioration de l'activité catalytique résultant de la présence sur le support du catalyseur d'acides de Lewis à base de zirconium, molybdène, tungstène ou titane, peut être majorée considérablement si l'on optimise les conditions d'activation finale du catalyseur. Les demanderesses ont, en effet, établi que :
- d'une part, l'activité est améliorée par la formation de sites de Bronsted du type -$OMX_3H$ et -$OM'X_4H$ (dans lesquels M peut être l'aluminium, le bore ou le gallium, M' peut être le zirconium, le molybdène, le tungstène ou le titane, et X un halogène tel que le chlore ou le brome), dont la formation à partir des sites de Lewis, nécessite un apport de calories important ;
- d'autre part, l'élévation exagérée de la température du catalyseur tend, au contraire, à libérer les halogénures de zirconium, de molybdène de tungstène ou de titane, ce qui se traduit par un abaissement notable et irréversible de l'activité du catalyseur ;
- enfin, une bonne activité du catalyseur n'est obtenue que lorsque l'étape d'activation est pratiquée dans des conditions spécifiques, c'est-à-dire en milieu acide et non-oxydant ou réducteur.

La présente invention a donc pour but d'obtenir une amélioration sensible de l'activité des catalyseurs halogénés contenant un métal de la mine du platine et possédant au moins deux types de sites de Lewis liés au support, grâce à une étape d'activation à une température déterminée et en présence d'un fluide approprié, cette étape d'activation étant mise en oeuvre entre l'étape de fabrication proprement dite du catalyseur et celle d'utilisation de celui-ci dans un réacteur.

A cet effet, l'invention a pour objet un procédé de préparation et d'activation d'un catalyseur, comprenant une étape de fabrication d'un support constitué au moins partiellement par au moins un oxyde minéral réfractaire, une étape de dépôt sur ledit support d'au moins un métal de la mine du platine, et une étape destinée à la formation sur le support d'au moins deux halogénures métalliques du type acide de Lewis, le premier halogénure appartenant à la famille des halogénures de zirconium, de molybdène, de tungstène ou de titane et le second halogénure appartenant à la famille des halogénures d'aluminium, de bore ou de gallium, caractérisé en ce que, entre le dépôt des dits halogénures métalliques du type acide de Lewis ou de précurseurs de ces halogénures tels que leurs dérivés alkylés, et l'utilisation du catalyseur dans le réacteur, on soumet le catalyseur à une étape d'activation en le disposant dans un milieu, d'une part, acide et, d'autre part, non oxydant ou réducteur, en présence d'un gaz contenant un acide halohydrique, à une température comprise entre 300 et 475°C, de manière que sa teneur finale en métal du type zirconium, molybdène, tungstène ou titane, soit

2

comprise entre 0,15 et 1% par rapport au poids du support.

L'invention a également pour objet les catalyseurs obtenus par la mise en oeuvre du procédé qui vient d'être défini.

L'invention a enfin pour objet l'utilisation d'un tel catalyseur dans un procédé de conversion d'hydrocarbures, notamment d'isomérisation des hydrocarbures alkylaromatiques et d'alkylation des paraffines ou des hydrocarbures aromatiques par des oléfines.

Le milieu acide ou non oxydant ou réducteur utilisé dans la phase d'activation du procédé conforme à l'invention contiendra avantageusement un acide halohydrique ou un précurseur d'acide halohydrique tel que, de préférence, l'acide chlorydrique ou un chlorure organique et, éventuellement, de l'hydrogène et/ou un gaz inerte vis-à-vis des constituants du catalyseur.

Les supports des catalyseurs conformes à l'invention comprennent des substances réfractaires possédant une surface et un volume poreux spécifiques suffisants, et possédant en outre des fonctions chimiques superficielles. La surface spécifique peut être comprise entre 1 et 500 $m^2$ par gramme et, de préférence, entre 100 et 350 $m^2$ par gramme, le volume poreux spécifique étant supérieur à 0,1 $cm^3$ par gramme. Ces substances peuvent être, par exemple, une alumine, une silice, une silice-alumine ou un aluminosilicate, la magnésie, la zircone, les oxydes de gallium, de titane, de zirconium, de thorium, de bore ou un mélange de ces oxydes.

Des alumines particulièrement adaptées sont la gamma- et l'êta-alumine préparées par traitement thermique à 400-850°C environ. Ces alumines servent de support pour les autres composants du catalyseur et elles doivent donc être, de préférence, sensiblement exemptes de sodium. Une calcination peut convenir, en prenant soin d'effectuer celle-ci à une température telle que les groupements -OH dits de constitution ne soient pas totalement éliminés au cours du traitement. Ainsi, pour une alumine de surface spécifique supérieure ou égale à 5 $m^2$/g, la calcination peut être effectuée entre 400 et 1000°C et, de préférence, entre 400 et 800°C. Le support lui-même est réalisé sous une forme qui détermine celle du catalyseur final, à savoir sous forme de sphères, de pastilles, de granules, ou d'extrudés, suivant le cas.

Les catalyseurs les plus avantageux sont ceux dont la teneur en métal de la mine de platine (c'est-à-dire les métaux choisis parmi le platine, le ruthénium, le rhodium ou le palladium), rapportée au poids du support, est comprise entre 0,02 et 2%. Pour obtenir des propriétés catalytiques satisfaisantes, la teneur de ce métal est de préférence supérieure à 0,10%, mais, en raison du coût du métal, elle est de préférence limitée à 0,80%. Le dépôt sur le support se fait par des moyens connus en soi, par exemple par imprégnation à l'aide de solutions contenant lesdits métaux, soit sous forme anionique, soit sous forme cationique. Le support peut ensuite, de façon également connu, en soi, être séché, puis calciné éventuellement en milieu réducteur à une température généralement comprise entre 400 et 600°C.

L'étape destinée à la formation sur le support d'au moins deux halogénures métalliques du type acide de Lewis peut intervenir de plusieurs façons, également toutes connues en soi, dont on rappellera brièvement les caractéristiques.

Une première méthode a été décrite par exemple dans le brevet anglais n° 952 348, dans le cas du dépôt d'un halogénure d'aluminium. Selon cette méthode, on réalise le dépôt d'un précurseur du site de Lewis par action en milieu anhydre de trialkylaluminium et, en particulier, de triisobutylaluminium, fixant ainsi le précurseur de site de Lewis par élimination d'une molécule d'isobutane. Le produit ainsi obtenu est alors transformé en dihalogénure d'aluminium par réaction avec de l'acide chlorhydrique anhydre.

Une variante de la méthode précédente a été décrite par exemple dans le brevet français n° 2 206 124, selon laquelle le précurseur du dichloroaluminate est préparé cette fois par réaction du support avec un halogénure d'hydrocarbylaluminium, toujours en milieu anhydre, avant transformation en dichlorure, également par l'acide chlorhydrique.

Une troisième méthode, plus directe, telle que décrite dans les brevets français n° 2 202 128 et n° 2 320 775, consiste à utiliser directement la réaction du support avec l'halogénure métallique. Ce dernier étant un solide, il est sublimé à température élevée, de préférence supérieure à 200°C, en présence d'un gaz diluant.

Chacune de ces méthodes demeure applicable au dépôt des deux halogénures métalliques du type acide de Lewis nécessaires à la préparation des catalyseurs objet de la présente invention. Toutefois, en ce qui concerne le dépôt des halogénures de zirconium, de molybdène, de tungstène ou de titane, une méthode plus simple peut consister à déposer, par imprégnation sur le support, de sels de ces métaux tels que leurs nitrates, leurs chlorures ou leurs oxalates. Cette imprégnation peut ainsi être réalisée de façon parfaitement homogène à la teneur en métal souhaitée. La transformation en halogénures de Lewis est ensuite réalisée au cours de l'étape ultérieure de mise en contact avec, en particulier, l'acide chlorhydrique ou un précurseur de cet acide tel que, par exemple, un halogénure d'alcoyle.

Quelle que soit la procédure de création des sites de Lewis, la préparation par les procédés qui viennent d'être rappelés du catalyseur halogéné comportant un support constitué au moins partiellement par un oxyde minéral réfractaire, un métal de la mine du platine et au moins deux halogénures métalliques du type acide de Lewis, conduit à des catalyseurs sensiblement de même nature. Toutefois, les demanderesses ont pu établir que, de façon surprenante, l'activité de ces catalyseurs augmentait considérablement lorsque les sites de Lewis étaient transformés en sites de Bronsted par réaction avec un acide halohydrique, généralement de l'acide chlorhydrique, à température élevée, c'est-à-dire au-delà d'une température de l'ordre de 200°C et de préférence au-delà de 300°C, à condition de procéder en milieu non-oxydant ou réducteur, c'est-à-dire en présence d'un gaz pouvant contenir au moins partiellement de l'hydrogène.

De plus, lorsque l'on opère avec des halogénures d'un métal promoteur tel que les halogénures de zirconium, de molybdène, de tungstène ou de titane, on observe à partir de ces mêmes températures supérieures à 300°C, une diminution constante de la teneur de ces halogénures, avec pour conséquence directe une diminution de l'activité catalytique due à la synergie entre les deux types de sites actifs. L'invention vise à remédier à cet inconvénient en réalisant l'activation finale du catalyseur en milieu non oxydant et de préférence en milieu réducteur, et en présence d'un gaz contenant un acide halohydrique et, de préférence, de l'hydrogène, à une température comprise entre 300 et 475°C.

Avantageusement, cette étape d'activation sera réalisée à partir d'un catalyseur possédant au départ un léger excès d'halogénure métallique de zirconium, de molybdène, de tungstène et/ou de titane, pour compenser la diminution prévisible de la teneur de ces halogénures métalliques lors de ladite étape d'activation. Cet excès d'halogénure métallique pourra être avantageusement compris entre 5% et 200% par rapport à la teneur finale, suivant les cas.

A l'issue de l'étape d'activation , dont la durée est généralement comprise entre 1/4 d'heure et 2 heures, le catalyseur possèdera avantageusement :
- une teneur en métal du type zirconium, molybdène, tungstène ou titane qui, rapportée au poids du support, sera comprise entre 0,15 et 8,0 %, de préférence entre 0,15 et 1%;
- une teneur en aluminium ajouté, en bore ou en gallium qui, rapportée au poids du support, sera comprise entre 1 et 15 %;
- une teneur totale en halogène qui, rapportée au poids du support, sera comprise entre 2 et 15 %.

En outre, le rapport métal de la mine du platine sur métal promoteur du catalyseur activé sera avantageusement compris entre 0,25 et 5.

Les exemples qui vont suivre ont pour but de mettre en évidence la supériorité des catalyseurs activés selon la présente invention, par rapport à l'art antérieur. Ils ne sauraient toutefois la limiter.

## EXEMPLE I

Cet exemple concerne un mode de préparation de quatre catalyseurs, ainsi que la comparaison de leur activité pour l'hydroisomérisation du n-pentane ou du n-hexane, avant et après l'étape d'activation conforme à la présente invention.

Le support réfractaire utilisé pour tous les catalyseurs est une alumine, dont les caractéristiques moyennes sont les suivantes :
- surface spécifique : 200 m$^2$/g,
- volume poreux : 0,50 cm$^3$/g,
- rayon moyen des pores : $50.10^{-8}$cm (50 Å),
- forme : extrudés de 1,5mm de diamètre moyen.

Cette alumine, calcinée pendant 4 heures à 600°C avant le dépôt des différents métaux, sera appelée ci-après alumine-support.

L'alumine support est alors divisé en cinq lots de 100g, dont quatre seulement sont alors imprégnés respectivement avec des sels de zirconium, de molybdène, de tungstène et de titane en solution dans 250 cm$^3$ d'acide chlorhydrique normal. Après évaporation dans un évaporateur rotatif, le catalyseur est séché vers 120°C, puis calciné durant 2 heures à 600°C.

Chacun des lots est à nouveau plongé dans une solution diluée d'acide chlorhydrique, de normalité environ 0,1 N. Après essorage à température ambiante, l'alumine est mise en contact avec une solution d'acide hexachloroplatinique en circulation, dont la concentration initiale en platine est telle que le catalyseur contienne environ 0,35% en poids de platine, après essorage, puis séchage à 120°C. Les solides sont alors calcinés vers 530°C dans un four à moufle.

Enfin, les lots de solides sont soumis à une réduction par l'hydrogène pendant environ 1 heure, à 500°C. Ils contiennent environ 1,4% en poids de chlore, et 0,33% en poids de platine.

Chacun de ces lots est alors soumis à un traitement direct au chlorure d'aluminium : on procède à la sublimation de trichlorure d'aluminium dans un courant d'hydrogène (pression totale du courant gazeux égale à une atmosphère, pression partielle du trichlorure d'aluminium égale à $3,999.10^4$ Pa, soit 300 Torr). Ce traitement est effectué pendant environ trois heures, à une température de l'ordre de 275 à 300°C, suivant les cas.

On obtient ainsi un premier lot de catalyseur témoin T1, ne comprenant que du platine et des sites de Lewis de formule -O-AlCl$_2$, ainsi que quatre lots de catalyseur bimétallique A1, B1, C1 et D1 non activés, possédant une teneur en chlore de l'ordre de 5 à 6%.

Les caractéristiques des catalyseurs non activés ainsi préparés sont rassemblées dans le Tableau I suivant.

TABLEAU I

| N° du lot | Teneur en platine | Sel d'imprégnation | Teneur en second métal(M) | Teneur en chlore |
|---|---|---|---|---|
| T1 | 0,33 | – | – | 6,0 |
| A1 | 0,38 | $ZrO(NO_3)_3, 2H_2$ | 0,60 | 6,2 |
| B1 | 0,36 | $(NH_4)_6Mo_7O_{24}, 4H_2O$ | 0,14 | 6,4 |
| C1 | 0,36 | $(NH_4)_{10}W_{12}O_{41}, 5H_2O$ | 0,30 | 6,4 |
| D1 | 0,36 | $Ti_2(C_2O_4)_3, 10H_2O$ | 0,22 | 5,9 |

On procède alors sur le lot A1 à une série d'essais destinés à mettre en évidence l'influence de la température sur l'étape d'activation destinée à transformer les sites de Lewis encore présents sur le catalyseur, en sites de Bronsted :

20 grammes du catalyseur A sont ainsi balayés pendant une heure par cinq litres d'hydrogène contenant 10% d'acide chlorhydrique anhydre.

On obtient ainsi cinq catalyseurs A2, A3, A4, A5 et A6, activés à diverses températures, dont l'activité a été testée dans un essai d'isomérisation du n-hexane en à 145°C, sous 30 bar de pression totale, avec un rapport moléculaire hydrogène sur hydrocarbure égal à 3 et avec un débit massique horaire de n-hexane par rapport au poids de catalyseur égal à 5.

Les températures d'activation des catalyseurs et les résultats des essais sont rassemblés dans le Tableau II ci-après.

TABLEAU II

| :N°<br>:du<br>:lot | : Température:<br>:d'activation:<br>: | : Teneur:<br>: finale:<br>: en Zr : | : Rapport :<br>:atomique :<br>: Zr/Pt : | : Teneur :<br>:finale en:<br>: chlore : | : Conversion:<br>: (en %) :<br>:du n-hexane: |
|---|---|---|---|---|---|
| :A2 : | 275 | : 0,60 : | 3,4 : | 6,9 : | 70 |
| :A3 : | 300 | : 0,60 : | 3,38 : | 6,8 : | 78 |
| :A4 : | 400 | : 0,47 : | 2,65 : | 6,4 : | 83 |
| :A5 : | 450 | : 0,38 : | 2,14 : | 6,4 : | 87 |
| :A6 : | 575 | : 0,16 : | 0,9 : | 5,9 : | 75 |

On constate, sur ce tableau, que, du fait de la diminution constante de la teneur en zirconium avec l'élévation de la température (alors que la teneur en platine reste pratiquement invariable), il existe un optimum de température entre 300 et 475°C, permettant de tirer le meilleur parti de la synergie due à la présence du métal promoteur, qui est ici le zirconium.

En outre, il a été vérifié qu'à la température optimum d'environ 450°C, les conditions de bonne activation (milieu acide et non-oxydant ou réducteur) avaient une influence non négligeable sur la conversion, puisqu'une partie de l'échantillon A1, simplement placée pendant 1 heure à 450°C sous balayage d'azote, ne possède plus qu'un taux de conversion de l'ordre de 80 au lieu de 87 selon le Tableau II.

D'autres essais de conversion, effectués cette fois sur du n-pentane, ce qui se traduit par un taux de conversion moins élevé qu'avec du n-hexane, ont été effectués :

- d'une part, avec des catalyseurs $T_5$, $A_5$, $B_5$, $C_5$, $D_5$, obtenus en soumettant les catalyseurs T, A, B, C, D du Tableau I à une activation conforme à la présente invention (à 450°C, sous balayage d'hydrogène contenant environ 10% d'acide chlorhydrique);

- d'autre part avec des catalyseurs $T_6$, $A_6$, $B_6$, $C_6$, $D_6$, obtenus également à partir des catalyseurs du Tableau I, en les soumettant à une activation d'un type connu par FR-A-2 320 775 (balayage sous azote à 500°C, pendant deux heures).

Les essais de conversion ont été effectués dans les conditions suivantes :

- on fait passer, sous une pression de 3M Pa (30 bar) et à une température de 150°C, du normal-pentane et de l'hydrogène sur 10 cm³ de catalyseur placés dans un réacteur. La vitesse spatiale horaire est égale à 3, le rapport molaire $H_2$ sur hydrocarbure est, lui, égal à 2,5. Le seul produit de la réaction est pratiquement l'isopentane. L'activité des différents catalyseurs peut donc être estimée par la conversion en isopentane.

Les caractéristiques des catalyseurs et les résultats des essais sont rassemblés dans le Tableau III ci-après.

## TABLEAU III

| :Cata-lyseur activé à 450°C | :Rapport atomique M/Pt | :Conversion du n-pentane (% en poids) | :Catalyseur activé à 500°C | :Rapport M/Pt | :Conversion du n-pentane (% en poids) |
|---|---|---|---|---|---|
| T5 | – | 65,0 | T6 | – | 43 |
| A5 | 2,14 | 78,4 | A6 | 1,8 | 62 |
| B5 | 0,60 | 76,5 | B6 | 0,5 | 60 |
| C5 | 0,70 | 76,7 | C6 | 0,6 | 56 |
| D5 | 2,0 | 76,0 | D6 | 1,6 | 55 |

Les conversions mesurées montrent :
- d'une part qu'il y a bien une synergie due à la présence d'un promoteur M (zirconium, molybdène, tungstène et titane), puisque l'activité des lots A, B, C et D est toujours supérieure à celle du lot témoin T,
- d'autre part, que cette synergie est optimum lorsque l'étape d'activation est réalisée en milieu acide et réducteur à une température comprise entre 300 et 475°C, avec un gain de conversion de l'ordre de 15 à 20 points par rapport à l'art antérieur.

### EXEMPLE II

Cet exemple concerne la préparation de trois autres catalyseurs ainsi que la comparaison de leur activité pour l'hydroisomérisation du n-hexane, avant et après l'étape d'activation conforme à la présente invention.

Dans ces catalyseurs, l'alumine support est la même que celle utilisée dans l'exemple I. Le zirconium et le platine sont déposés de façon analogue. Un premier lot (catalyseur T) ne contenant que du platine est réalisé à titre de témoin, tandis que, dans un second lot (catalyseur E), du zirconium est ajouté comme promoteur.

20 grammes de chacun de ces deux lots de catalyseur sont placés dans un réacteur en acier inoxydable sous gaz inerte. On introduit ensuite, à 50°C, 50 cm$^3$ d'une solution normale de dichloréthylaluminium dans de l'heptane normal. Après une heure, on élimine le solvant et l'on sèche le solide obtenu.

On procède alors sur la fraction restante de chacun des deux catalyseurs ci-dessus à une étape d'activation conforme à la présente invention : 10 g de chacun de ceux-ci sont balayés pendant deux heures à des températures variant entre 300 et 400°C, suivant le cas, par de l'acide chlorhydrique anhydre et éventuellement une certaine proportion d'hydrogène et de gaz inerte. On obtient ainsi des lots de catalyseur $T_1$, $E_1$ et $E_2$, dont les caractéristiques et l'activité figurent au Tableau IV ci-après.

L'activité de ces catalyseurs a été testée dans un essai d'isomérisation du n-hexane à une température de 150°C, sous une pression de 30 bar, en présence d'hydrogène, à une vitesse spatiale horaire de 5. Le rapport moléculaire hydrogène sur hydrocarbure est maintenu égal à 3.

Les résultats de ces essais sont rassemblés dans le Tableau IV suivant.

TABLEAU IV

| Lot de catalyseur | Température d'activation | Teneur en Pt | Teneur en Zr | Teneur en Cl | Rapport M/Pt | Conversion du n-hexane (1) (%) |
|---|---|---|---|---|---|---|
| T | - | 0,30 | - | 8,9 | - | - |
| E | - | 0,30 | 0,80 | 8,5 | 5,7 | - |
| T1 | 300 | 0,30 | - | 5,8 | - | 68 |
| E1 | 300 | 0,30 | 0,31 | 5,7 | 2,2 | 75 |
| E2 | 400 | 0,30 | 0,25 | 5,50 | 1,8 | 82 |

On constate qu'après activation conformément à la présente invention, le catalyseur bimétallique possède la meilleure activité, du même ordre que celle des lots préparés selon l'Exemple I.

EXEMPLE III

Cet exemple concerne la préparation de deux autres catalyseurs, ainsi que la mesure de leur activité catalytique après l'étape d'activation conforme à la présente invention.

On procède cette fois encore au dépôt de zirconium, puis de platine, selon le mode décrit au début de l'exemple I, et l'on obtient un catalyseur F dont les caractéristiques sont indiquées au Tableau V ci-après.

20 grammes de ce catalyseur sont placés dans un réacteur avec 15 cm³ de n-heptane sec sous atmosphère d'azote et l'on ajoute ensuite, goutte à goutte et sous agitation, 50 ml de triéthylaluminium, puis on fait barboter dans la solution à 90°C un courant gazeux d'azote. Après une heure, le lot de catalyseur est isolé et sèché sous atmosphère inerte.

Une moitié de ce lot de catalyseur est alors activée pendant deux heures à 300°C, avec de l'acide chlorhydrique anhydre, et une autre moitié à 400°C.

On obtient ainsi des lots de catalyseur $F_1$ et $F_2$, dont l'activité est mesurée en effectuant une conversion par isomérisation du n-hexane, dans les conditions indiquées à l'Exemple I.

Les résultats de ces essais apparaissent dans le Tableau V suivant.

<div align="center">TABLEAU V</div>

| lot | Température d'activation | Teneur en Pt | Teneur en Zr | Teneur en Cl | Conversion (% en poids) de n-hexane |
|-----|-------------------------|--------------|--------------|--------------|-------------------------------------|
| F | – | 0,30 | 0,80 | – | – |
| F1 | 300 | 0,30 | 0,30 | 5,0 | 83,8 |
| F2 | 400 | 0,30 | 0,26 | 4,9 | 86,4 |

On constate que le catalyseur bimétallique activé conformément à l'invention possède bien des propriétés améliorées pour la conversion des hydrocarbures qui sont comparables à celles des catalyseurs de l'Exemple 1.

## Revendications

1. Procédé de préparation et d'activation d'un catalyseur, comprenant une étape de fabrication d'un support constitué au moins partiellement par au moins un oxyde minéral réfractaire, une étape de dépôt sur ledit support d'au moins un métal de la mine du platine, et une étape destinée à la formation sur le support d'au moins deux halogénures métalliques du type acide de Lewis, le premier halogénure appartenant à la famille des halogénures de zirconium, de molybdène, de tungstène ou de titane et le second halogénure appartenant à la famille des halogénures d'aluminium, de bore ou de gallium, caractérisé en ce que, entre le dépôt des dits halogénures métalliques du type acide de Lewis ou de précurseurs de ces halogénures tels que leurs dérivés alkylés, et l'utilisation du catalyseur dans le réacteur, on soumet le catalyseur à une étape d'activation en le maintenant dans un milieu, d'une part, acide et, d'autre part, non oxydant ou réducteur, en présence d'un gaz contenant un acide halohydrique, à une température comprise entre 300 et 475°C, de manière que sa teneur finale en métal promoteur de type zirconium, molybdène, tungstène ou titane soit comprise entre 0,15 et 8%, de préférence entre 0,15 et 1% par rapport au poids du support.

2. Procédé selon la revendication 1, caractérisé en ce que le milieu acide et non oxydant de l'étape d'activation contient de l'hydrogène ou un gaz inerte vis-à-vis des constituants du catalyseur.

3. Procédé selon l'une des revendications 1 et 2, caractérisé en ce que l'étape d'activation est conduite de façon telle que le rapport métal de la mine de platine sur métal promoteur du catalyseur, à l'issue de cette étape, est compris entre 0,25 et 5.

4. Procédé selon l'une des revendications 1 à 3, caractérisé en ce que, avant l'étape d'activation, la teneur en halogénure de zirconium, molybdène, tungstène ou titane du catalyseur est supérieure de 5 à 200% à la teneur finale du catalyseur activé.

5. Procédé selon l'une des revendications 1 à 4, caractérisé en ce que le milieu acide non oxydant de l'étape d'activation contient entre 5 et 100% en poids d'acide chlorhydrique anhydre.

6. Procédé selon l'une des revendications 1 à 5, caractérisé en ce que le milieu acide non oxydant de l'étape d'activation contient de 0 à 20% en poids d'hydrogène.

7. Procédé selon l'une des revendications 1 à 6, caractérisé en ce que la teneur finale en aluminium ajouté, en bore ou en gallium du catalyseur activé est comprise entre 1 et 15% en poids du support.

8. Procédé selon l'une ou l'autre des revendications 1 à 6, caractérisé en ce que la teneur finale en halogène du catalyseur activé est comprise entre 2 et 15% en poids du support.

9. Procédé selon l'une des revendications 1 à 7, caractérisé en ce que la teneur en métal de la mine du platine de catalyseur activé est comprise entre 0,02 et 2% et, de préférence, entre 0,1 et 0,8%.

10. Procédé selon l'une des revendications 1 à 8, caractérisé en ce que l'oxyde minéral réfractaire entrant dans la composition du support est choisi dans le groupe constitué par l'alumine, les alumino-silicates, la silice, le zircone, l'oxyde de thorium, la magnésie, l'oxyde de gallium, l'oxyde de titane, l'oxyde de bore et un mélange quelconque de ces composés.

11. Utilisation d'un catalyseur préparé par un procédé selon l'une des revendications 1 à 10 dans un procédé de conversion d'hydrocarbures, notamment d'hydroisomérisation des paraffines en C4 à C7, d'isomérisation des hydrocarbures alkylaromatiques et d'alkylation des paraffines ou des hydrocarbures aromatiques par des oléfines.

## Patentansprüche

1. Verfahren zur Präparierung und Aktivierung eines Katalysators, bestehend aus einem Schritt der Herstellung eines Trägers, der zumindest teilweise mindestens aus einem schwer schmelzbaren Mineraloxid, einem Schritt der Ablagerung mindestens eines Platinmetalls auf besagtem Träger und einem Schritt besteht, der die Bildung von mindestens zwei Metallhalogeniden vom Typ der Lewis-Säure, auf dem Träger zum Ziel hat, wobei das erste Halogenid zur Familie der Zirkon-, Molybdän-, Wolfram- oder Titanhalogenide gehört und das zweite Halogenid zur Familie der Aluminium-, Bor- oder Galliumhalogenide gehört, dadurch gekennzeichnet, daß der Katalysator zwischen der Ablagerung der besagten Metallhalogenide vom Typ der Lewis-Säure oder von Zwischenstoffen dieser Halogenide, wie z.B. ihrer Alkenderivate, und der Verwendung des Katalysators im Reaktor einem Aktivierungsschritt unterzogen wird, indem er in einem Medium, das einerseits sauer und andererseits nicht oxidierend oder reduzierend ist, bei Vorhandensein eines Gases, das eine Halogenwasserstoffsäure enthält, bei einer Temperatur zwischen 300 und 475°C gehalten wird, damit sein Endgehalt an Promotermetall vom Typ Zirkon, Molybdän, Wolfram oder Titan im Verhältnis zum Gewicht des Trägers zwischen 0,15 und 8%, vorzugsweise zwischen 0,15 und 1%, liegt.

2. Verfahren nach Anspruch 1, dadurch gekennzeichnet, daß das saure und nicht oxidierende Medium aus dem Aktivierungsschritt Halogenid oder ein Gas enthält, das gegenüber den Bestandteilen des Katalysators inert ist.

3. Verfahren nach einem der Ansprüche 1 und 2, dadurch gekennzeichnet, daß der Aktivierungsschritt so durchgeführt wird, daß das Verhältnis des Platinmetalls auf dem Promotermetall des Katalysators am Ende dieses Schrittes zwischen 0,25 und 5 liegt.

4. Verfahren nach einem der Ansprüche 1 bis 3, dadurch gekennzeichnet, daß der Zirkonium-, Molybdän-, Wolfram- oder Titanhalogenidgehalt des Katalysators vor dem Aktivierungsschritt um 5 bis 200% größer als der Endgehalt des aktivierten Katalysators ist.

5. Verfahren nach einem der Ansprüche 1 bis 4, dadurch gekennzeichnet, daß das saure, nicht oxidierende Medium des Aktivierungsschrittes zwischen 5 und 100 Gewichtsprozent wasserfreie Salzsäure enthält.

6. Verfahren nach einem der Ansprüche 1 bis 5, dadurch gekennzeichnet, daß das saure, nicht oxidierende Medium des Aktivierungsschrittes zwischen 0 und 20 Gewichtsprozent Wasserstoff enthält.

7. Verfahren nach einem der Ansprüche 1 bis 6, dadurch gekennzeichnet, daß der Endgehalt des aktivierten Katalysators an hinzugefügtem Aluminium, Bor oder Gallium zwischen 1 und 15 Gewichtsprozent des Trägers liegt.

8.  Verfahren nach einem oder anderem der Ansprüche 1 bis 6, dadurch gekennzeichnet, daß der Endgehalt des aktivierten Katalysators an Halogen zwischen 2 und 15 Gewichtsprozent des Trägers liegt.

9.  Verfahren nach einem der Ansprüche 1 bis 7, dadurch gekennzeichnet, daß der Endgehalt des aktivierten Katalysators an Platinmetall zwischen 0,02 und 2%, vorzugsweise zwischen 0,1 und 0,8%, liegt.

10. Verfahren nach einem der Ansprüche 1 bis 8, dadurch gekennzeichnet, daß das schwer schmelzbare Mineraloxid, das zur Zusammensetzung des Trägers gehört, aus der Gruppe ausgewählt wird, die von Aluminium, Aluminiumsilikaten, Kieselsäureanhydrid, Zirkon, Thoriumoxid, Magnesium, Galliumoxid, Titanoxid, Boroxid und einer beliebigen Mischung dieser Verbindungen gebildet wird.

11. Verwendung eines mit einem Verfahren gemäß einem der Ansprüche 1 bis 10 präparierten Katalysators in einem Verfahren zur Konvertierung von Kohlenwasserstoffen, insbesondere der Hydroisomerisierung der Paraffine in C4 bis C7, der Isomerisierung der alkylaromatischen Kohlenwasserstoffe und der Alkylierung der Paraffine oder der aromatischen Kohlenwasserstoffe durch Olefine.


## Claims

1.  A method of preparing and activating a catalyst, comprising a stage of producing a support composed at least partly of at least one refractory mineral oxide, a stage of depositing on said support at least one metal of platinum type, and a stage intended for the formation on the support of at least two metal halides of the Lewis acid type, the first halide belonging to the family of the halides of zirconium, molybdenum, tungsten or titanium, and the second halide belonging to the family of the halides of aluminium, boron or gallium, characterised in that, between the deposition of said metal halides of the Lewis acid type or precursors of these halides, such as their alkylated derivatives, and the use of the catalyst in the reactor, the catalyst is subjected to an activation stage by maintaining it in a medium which is acid, on the one hand, and non-oxidising or reducing, on the other hand, in the presence of a gas containing a halohydric acid at a temperature of between 300 and 475°C, in such a way that its final content of promoter metal of zirconium, molybdenum, tungsten or titanium type is between 0.15 and 8%, preferably between 0.15 and 1% in relation to the weight of the support.

2.  A method according to claim 1, characterised in that the acid and non-oxidising medium of the activation stage contains hydrogen or a gas which is inert with respect to the constituents of the catalyst.

3.  A method according to one of claims 1 and 2, characterised in that the activation stage is carried out in such a way that the ratio of metal of the platinum type to metal promoter of the catalyst, at the end of this stage, is between 0.25 and 5.

4.  A method according to any one of claims 1 to 3, characterised in that, before the activation stage, the halide content of zirconium, molybdenum, tungsten or titanium in the catalyst is greater by 5 to 200% than the final content of the activated catalyst.

5.  A method according to any one of claims 1 to 4, characterised in that the non-oxidising acid medium of the activation stage contains between 5 and 100% by weight of anhydrous hydrochloric acid.

6.  A method according to any one of claims 1 to 5, characterised in that the non-oxidising acid medium of the activation stage contains from 0 to 20% by weight of hydrogen.

7.  A method according to any one of claims 1 to 6, characterised in that final content of added aluminium, boron or gallium in the activated catalyst is between 1 and 15% by weight of the support.

8.  A method according to any one of claims 1 to 6, characterised in that the final content of halogen in the activated catalyst is between 2 and 15% by weight of the support.

9.  A method according to any one of claims 1 to 7, characterised in that the content of metal of the platinum type in the activated catalyst is between 0.02 and 2% and, preferably, between 0.1 and 0.8%.

10. A method according to any one of claims 1 to 8, characterised in that the refractory mineral oxide entering into the composition of the support is chosen from the group comprising alumina, the alumino-silicates, silica, zirconia, thorium oxide, magnesia, gallium oxide, titanium oxide, boron oxide and any mixture of these compounds.

11. Use of a catalyst prepared by a method according to any one of claims 1 to 10 in a hydrocarbon converson process, in particular hydroisomerisation of C4 to C7 paraffins, isomerisation of alkylaromatic hydrocarbons and alkylation of the paraffins or aromatic hydrocarbons by olefins.